Europäisches Patentamt

**European Patent Office**

Office européen des brevets

(11) Publication number: **0 156 943**
A1

## (12) EUROPEAN PATENT APPLICATION

(21) Application number: **84109006.1**

(22) Date of filing: **30.07.84**

(51) Int. Cl.⁴: **B 21 D 43/13**

(30) Priority: **02.03.84 US 585558**

(43) Date of publication of application: **09.10.85**
**Bulietin 85/41**

(84) Designated Contracting States: **BE DE FR GB IT NL SE**

(71) Applicant: **Murphy, William Patrick, 1067 Kennesaw**
**Avenue, Birmingham Michigan 48008 (US)**

(72) Inventor: **Murphy, William Patrick, 1067 Kennesaw**
**Avenue, Birmingham Michigan 48008 (US)**

(74) Representative: **Hranitzky, Wilhelm Max et al, NOVAPAT**
**- CABINET CHEREAU 5, Place du Molard,**
**CH-1204 Genève (CH)**

(54) **Die transfer system.**

(57) The disclosure relates to an improved die transfer system (10) for a press having a bolster (16) for the support of a die (14). The system comprises a pair of elongated, parallel upwardly opening housings (22 and 24) having horizontally extending vertically movable rails (26 and 28) therein. A plurality of rollers (42) are supported by each rail so as to be movable vertically therewith. An air bag (18) extends longitudinally of each of said housings under said rails and is engageable with the bottom thereof. Inflation of the air bags effects elevation of the rails and rollers into engagement with the bottom of the die and elevation of the die relative to the press bolster. The rails have laterally extending flanges (50) that are engageable with complementary shoulders (46 and 48) on the housing to limit upward movement of the rails and preclude bowing of the rails.

0156943

## DIE TRANSFER SYSTEM

Relatively heavy stamping and injection molding dies present a handling problem when such dies are assembled with or removed from the bolster of a press. The problem is complicated by the fact that the press generally has a ram or other superstructure mounted directly over the die support bolster precluding vertical lift of the die or die set by a conventional crane. Movement of a die set laterally with respect to the bolster of such presses has heretofore required relatively complex and fragile systems that are not compatible with the duty cycle of such presses.

The die transfer system of the instant invention is relatively rugged and simple in construction. Roller supporting rails are orientated in spaced, parallel relation above the upper surface of the conventional bolster of a press. An air bag is disposed under each rail which, upon inflation effects elevation of the rail. Elevation of each rail is controlled by continuous stops along the sides of the air bags which positively limit upward movement of the rail and therefore the degree of elevation of the die. Upon elevation, the die is free to move in a direction parallel to the rails.

Figure 1 is a perspective view of a press incorporating the die transfer system of the instant invention;

Figure 2 is a view taken in the direction of the arrow 2 of Fig. 1;

Figure 3 is a view taken in the direction of the arrow 3 of Fig. 2; and

Figure 4 is a view taken substantially along the line 4-4 of Fig. 3.

Figure 5 is a view, similar to Fig. 4, of another embodiment of the invention.

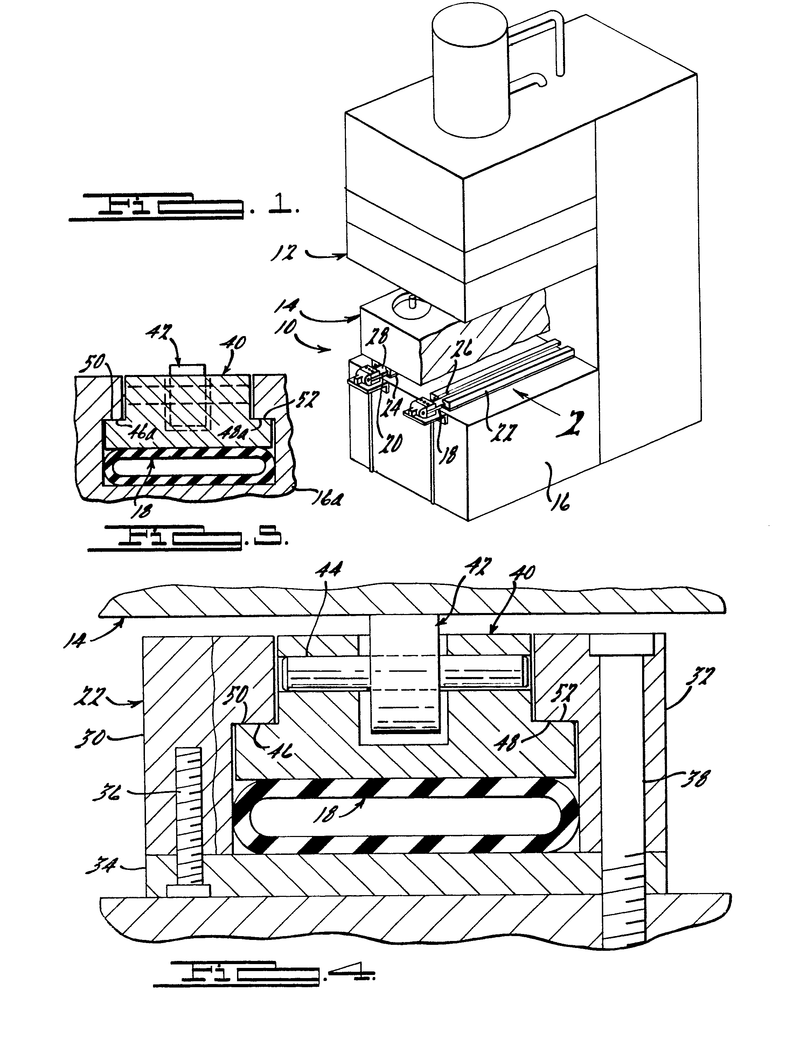

As seen in Fig. 1 of the drawings, a die transfer system 10, in accordance with a first constructed embodiment of the instant invention, is mounted on a heavy duty press 12 to facilitate movement of die 14 on and off a bolster 16 of the press 12. The transfer system 10 comprises a pair of air bags 18 and 20 mounted in a pair of housings 22 and 24 and underlying a pair of rails 26 and 28, respectively. The air bags 18 and 20 are adapted to be energized by air at conventional shop pressures, for example, $3.5 - 7.0 \text{ kg}/10^{-4}\text{m}^2$ (50-100 lbs. per square inch).

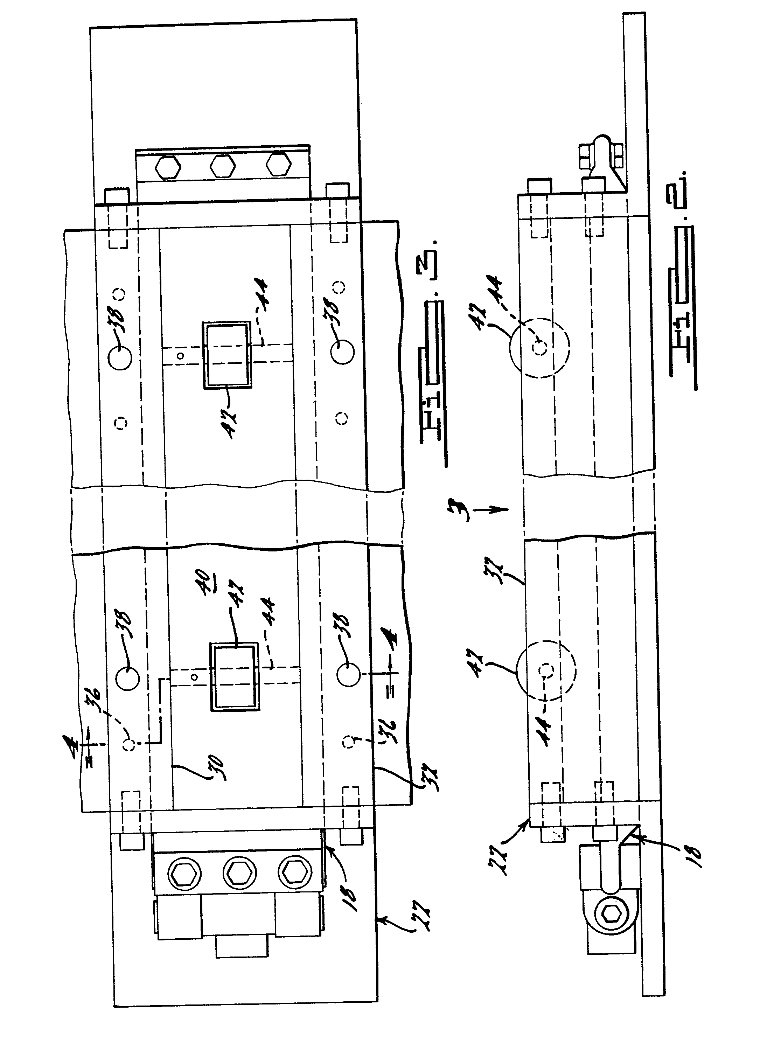

As best seen in Fig. 4 of the drawings, the housing 22, which is identical to the housing 24, comprises a pair of side frames 30 and 32 that are secured to a bottom plate 34 as by a plurality of bolts 36. The housing 22 is secured to the bolster 16 by machine screws 38.

The air bag 18 supports a rail 40 having a plurality of rolls 42 thereon. The rolls 42 are journaled on shafts 44 so as to elevate and support the die 14 for movement upon energization of the air bag 18 and elevation of the rail 40.

In accordance with the instant invention, two spaced, parallel shoulders 46 and 48 on the frames 30 and 32 are engageable with complementary flanges 50 and 52, respectively, on the rail 40 to limit upward movement of the rail 40. Because the shoulders 46 and 48 are coextensive with the flanges 50 and 52, bowing of the rail 40 is minimized thereby equalizing load on the rollers 42.

As seen in Fig. 5, another embodiment of the instant invention comprises the rail 40 and air bag 18 which are set into an inverted T-slot milled in a bolster 16a. The T-slot defines spaced shoulders 46a and 46b which function to limit upward movement of the rail 40 as discussed above. This embodiment of the invention permits use of conventional clearances, stroke, and die set heights.

Operation of the die transfer system 10 is best visualized by noting that, in Fig. 4, the air bag 18 is in the inflated condition and the rail 40 and

- 4 -                    0156943

each roller 42 thereon is elevated into engagement with the die 14 to effect elevation thereof. Deflation of the air bag 18 results in lowering of the rail 40 to a position wherein the upper surface of each roll 42 is disposed below the lower surface of the die 14 permitting the die 14 to rest upon side frames 30 and 32.

From the foregoing description it should be apparent that the die transfer system of the instant invention is relatively simple, yet rugged in construction. It is operable to effect elevation of relatively heavy die sets so as to condition them for lateral movement on the rolls of the transfer system.

The system is practical for die sets weighing from 0.9 - 75 t (1-80 US tons). In a working embodiment, the lift rails 40 have 3900# rollers on $15.25 \times 10^{-2}$ m (6-inch) centers. Lift is accomplished by air bag rated at 35 kg/$10^{-4}$m$^2$ (500 psi) under the rail 40. When actuated to "on", the rail 40 lifts $0.95 \times 10^{-2}$m (3/8 inch) to raise rollers 1.073 m (42 1/4 inch) above the top face of the side frames 30 and 32 or top 36 of the bolster 16. Lift capacity is approximately 14000# per running centimeter (2500# per running foot), depending on kg/$10^{-4}$m$^2$ (psi) input. The coefficient of rolling friction on the rollers is .007, so that a 10000# die set requires only 70# push force to effect lateral movement thereof.

To determine rail length for a given application, rail length in $10^{-2}$m is multiplied by 13.651 x air pressure in kg/$10^{-4}$m$^2$(rail length in inches is multiplied by 2.4375 x air pressure in psi) which equals lift force of rail. For example, a 122 x $10^{-2}$m long rail x 13.651 x 6.33 kg/$10^{-4}$m$^2$air (a 48 inch long rail x 2.4375 x 90 psi air) = 10530# lift force. If the heaviest die set for a given press is 25000# it would require three rails resulting in a total of 31590# lift.

Air consumption is approximately 0.0049 m$^3$ per running meter (1/20 cu. ft. per running foot) of rail. Specifically, 0.0175 m$^3$ at 7.03 kg/$10^{-4}$m$^2$and 0.0014 m$^3$ at 5.6 kg/$10^{-4}$m$^2$(0.578 cu. ft. at 100 psi and .0477 cu. ft. at 80 psi). Therefore, as an example, a 40000# die set using approximately 6.1 m (20 feet) of rail, would use 0.03 m$^3$ (1 cu. ft.) of air to fill the system.

While the preferred embodiment of the invention has been disclosed, it should be appreciated that the invention is susceptible of modification without departing from the scope of the following claims.

- 6 -                    0156943

CLAIMS

1. A die transfer system for a press having a bolster for the support of a die, said system comprising at least two elongated, parallel upwardly opening rail housings, defining a pair of inverted T-shaped cavities, a pair of elongated, horizontally extending vertically movable rails in said cavities, respectively, each of said housings having laterally inwardly extending shoulders at the upper extremity thereof for engagement with a pair of complementary laterally outwardly flanges on said rails, a plurality of rollers supported by each of said rails and movable vertically therewith, an air bag extending longitudinally of each of said cavities under said rail and engageable with the bottoms thereof, inflation of said air bags effecting elevation of said rails and rollers into engagement with the bottom of said die and elevation of said die relative to said bolster, said shoulders and flanges being engageable to limit upward movement of said rails.

2. A die transfer system for a press having a bolster for the support of a die, said system comprising at least two elongated, parallel upwardly opening housings having elongated, horizontally extending vertically movable rails therein, respectively, each of said housings comprising a pair of side frames having laterally inwardly extending shoulders at the upper extremity thereof for engagement with a pair of complementary laterally outwardly flanges on said rail, a plurality of rollers supported by said rail and movable vertically therewith, an air bag extending longitudinally of said housing under said rail and engageable with the bottom thereof, inflation of said air bag effecting elevation of said rail and rollers into engagement with the bottom of said die and elevation of said die relative to said bolster, said shoulders and flanges being engageable to limit upward movement of said rail.

3. A die transfer system in accordance with claim 2 wherein the side frames of said housing are secured to a bottom plate thereby to define an upwardly facing opening of generally inverted T-shaped cross section.

- 1|2

FIG. 1.

FIG. 3.

FIG. 4.

0156943

Fig. 3.

Fig. 2.

| Category | Citation of document with indication, where appropriate, of relevant passages | Relevant to claim | CLASSIFICATION OF THE APPLICATION (Int. Cl. 4) |
|---|---|---|---|
| | **DOCUMENTS CONSIDERED TO BE RELEVANT** | | EP 84109006.1 |
| Y | DE - A1 - 2 745 220 (HEINE)<br>  * Patentanspruch 4; Fig. 1 *<br>  -- | 1,2 | B 21 D 43/13 |
| Y | DE - B2 - 2 120 941 (K.K. KOMATSU)<br>  * Spalte 4, Zeilen 13,14 *<br>  -- | 1,2 | |
| A | FR - A1 - 2 422 500 (GEBROEDERS VAN DIJK)<br>  * Fig. 1 *<br>  ---- | | |
| | | | **TECHNICAL FIELDS SEARCHED (Int. Cl. 4)**<br><br>B 21 D<br>B 30 B<br>E 01 B |

The present search report has been drawn up for all claims

| Place of search | Date of completion of the search | Examiner |
|---|---|---|
| VIENNA | 14-06-1985 | GLAUNACH |